# EUROPEAN PATENT APPLICATION

(11) **EP 3 061 638 A1**
(43) Date of publication of application: **31.08.2016**
(21) Application number: 15156868.0
(22) Date of filing: 27.02.2015
(51) Int. Cl.: B60K 6/36, B60K 6/365, B60K 6/547, B60K 6/48, F16H 3/72, F16H 3/00, F16H 3/091, F16H 3/097

(54) **Multi-speed transmission and method for operating a multi-speed transmission**

(71) Applicant: AVL List GmbH, 8020 Graz (AT)
(72) Inventor: Davydov, Vitaly, 8020 Graz (AT); Nissen, Peter-Juergen, 8045 Graz (AT); De Bei, Marco, 8010 Graz (AT)
(74) Representative: Babeluk, Michael

(57) **Abstract**

The invention relates to a multi-speed transmission (10), especially for a vehicle, comprising an input shaft (11), two concentric driveshafts (13, 14) with plurality of gearwheels (GRa, G1a, G1a, G2a, G3a, G4a, G5a) on them, at least one driven shaft (15, 16) with a plurality of gearwheels (GRb, G1b, G1b, G2b, G3b, G4b, G5b) on it meshing with the gearwheels (GRa, G1a, G2a, G3a, G4a, G5a) on said driveshafts (13, 14), said gearwheels (GRa, G1a, G2a, G3a, G4a, G5a, GRb, G1b, G1b, G2b, G3b, G4b, G5b) being engageable to said shafts (13, 14, 15, 16) with clutches (C1, C2, C3, C4), forming a powerflow from said driveshafts (13, 14) to the driven shaft(s) (15, 16) with different ratios, a controllable lock-up clutch (CL) connecting said driveshafts (13, 14) with each other, a rotating electric machine (17), connected to a battery (19) via a control system (18), an output shaft (28), coaxial to said driveshafts (13, 14), constantly meshing with the driven shaft (15) via gearing and being directly engageable to at least one of the driveshafts (13, 14) via the clutches (C1, C4), a planetary gearset (20) with three links (21, 22, 23), first (21) of said links being connected to the first driveshaft (13) and the input shaft (11), second link (22) being connected to the second driveshaft (14), third link (23) being kinematically connected to the rotor (17a) of said electric machine (17).

The axis (30) of the rotor (17a) of the electric machine (17) is arranged spaced apart from the axis (31) of said driveshafts (13, 14), wherein the third link (23) is kinematically connected to the rotor (17a) of said electric machine (17) by a drivetrain (32), and the speed ratio between the second link (22) and the third link (23) is negative for stopped first link (21).

## Description

The invention relates to a multi-speed transmission, especially for a vehicle, comprising an input shaft, two concentric driveshafts with plurality of gearwheels on them, at least one driven shaft with a plurality of gearwheels on it meshing with the gearwheels on said driveshafts, said gearwheels being engageable to said shafts with clutches, forming a powerflow from said driveshafts to the driven shafts with different ratios, a controllable lock-up clutch connecting said driveshafts with each other, a rotating electric machine, connected to a battery via a control system, an output shaft, coaxial to said driveshafts, constantly meshing with the driven shafts via gearing and being directly engageable to at least one of the driveshafts via the clutch, a planetary gearset with three links, first of said links being connected to the first driveshaft and the input shaft, second link being connected to the second driveshaft, third link being kinematically connected to the rotor of said electric machine.

The document US 8,784,245 B2 describes a multi-speed transmission, especially for a vehicle, comprising an input shaft and two concentric driveshafts with plurality of gears on them. At least one driven shaft with a plurality of gears on it meshes with the gears on the, wherein the gears are engageable to said shafts with clutches, forming a powerflow from said driveshafts to the driven shafts with different ratios. A controllable lock-up clutch is arranged between two gears on said driveshafts, connecting said driving shafts with each other. A rotating electric machine is connected to a battery via a control system. An output shaft is arranged coaxial to said driveshafts and meshes constantly with the driven shafts via gearing. The output shaft is directly engageable to one of the driveshafts via a clutch. The transmission further comprises a planetary gearset with three links, wherein a first of said links is connected to the first driveshaft and the input shaft, a second link is connected to the second driveshaft, and a third link is kinematically connected to the rotor of said electric machine. The rotor of the electric machine is arranged coaxially to the driveshafts. The main disadvantage of this feature is that the rotor inertia is very high. So shaft speed synchronization during gear preselection takes much time and requires much power to be applied from the battery. The gear ratio is fixed, the machine cannot be effectively used, because the circumferential speed of the rotor is comparatively low. Liquid cooling of the large rotor is not easy to be implemented and potentially increases churning losses.

It is the object of the present invention to avoid these disadvantages and to provide a compact multi-speed transmission which enables short shaft speed synchronization time during preselection.

According to the present invention this is achieved in that the axis of rotation of the rotor of the electric machine is arranged spaced apart from the axis of rotation of said driveshafts, wherein the third link is kinematically connected to the rotor of said electric machine by a drivetrain, and the speed ratio between the second link and the third link is negative for stopped first link.

Preferably the at least one controllable lock-up clutch is arranged between one gearwheel of the first driveshaft and one gearwheel of the second driveshaft.

As the rotor of the electric machine is arranged not coaxially to said driveshafts, the rotor may be designed with low inertia, i.e. with small diameter and big length. Low inertia reduces the time of shaft speed synchronization during gear preselection, and reduces power from the battery for that.

The gear ratio may be adjusted for best utilization of the power of the electric machine.

The compact design of the rotor enables liquid cooling of the rotor with easy supply and drain of the coolant through its shaft. This gives opportunity to dissipate much braking energy in the rotor, reducing the load on the control system of the motor and the battery.

Torque-split connection of the planetary gearset gives opportunity of using the electric machine with high power dissipation capacity and the control system with small power capacity, because negative power should be applied to the shaft of the electric machine during torque-filled gearshifts.

Preferably the clutches are designed as dog clutches. Dog clutches are most compact, cheap and energy saving clutches. Conventional friction-based synchronizers are not required.

In order to improve the NVH (Noise, Vibration and Harshness) performance and the shifting quality of the transmission a vibration-damping device (e.g. a dual mass-flywheel) may be arranged on the input shaft.

According to a very simple embodiment of the invention fulfilling the requirements of said speed ratio the first link of the planetary gearset is a planet carrier, the second link is a ring gear, and the third link is a sun gear.

The first driveshaft may be mounted internally through the second driveshaft and the output shaft may be directly engageable to the first driveshaft via the clutch. This variant provides direct 6^{th} gear in a 7-speed transmission and direct 5^{th} gear in a 6-speed transmission.

Alternatively the second driveshaft may be mounted internally through the first driveshaft and the output shaft may be directly engageable to the second driveshaft via the clutch. This variant provides direct 5^{th} gear in the 7-speed transmission and direct support gear in the 6-speed transmission.

According to a preferred embodiment of the present invention the transmission comprises an actuator that drives both lock-up clutch and one of the clutches, engaging the powerflow from first driveshaft to the driven shaft. The lock-up clutch and one of the clutches, engaging one of the pinions on the first driveshaft, may share a common shifting sleeve. A common shifting sleeve is the most effective way to use a common shifting actuator.

The lock-up clutch is accessible from a central shift mechanism, e.g. with shifting drums, because it is not separated from other shifting forks by power split device and electric machine. A double shifting sleeve may be used to engage lock-up clutch and one of the gears in the transmission.

According to the invention for a 7-speed transmission the first driveshaft comprises driving gearwheels for 2^{nd} and 4^{th} speeds, and the second driveshaft comprises driving gearwheels for 1^{st} reverse/2^{nd} reverse, 1^{st}, 3^{rd} and 5^{th}/7^{th} speeds, wherein 2^{nd} and 4^{th} speeds are provided by engaged clutch of corresponding gear pair, 1^{st} reverse, 1^{st}, 3^{rd} and 5^{th} speeds are provided by engaged clutch of corresponding geartrain or gear pair and engaged lock-up clutch, 2^{nd} reverse speed is provided by engaged clutch of 1^{st} reverse/2^{nd} reverse geartrain and torque reaction from the rotor of the electric machine, 7^{th} speed is provided by engaged clutch of 5^{th}/7^{th} gear pair and torque reaction from the rotor of the electric machine, and 6^{th} speed is provided by engaged clutch, connecting the output shaft to the first driveshaft. The 7-speed transmission uses a 6-speed equivalent geartrain. 5^{th}/7^{th} speed gear pair is used twice - with engaged lock-up clutch at the 5^{th} gear, and with torque reaction from the rotor of the electric machine and speed multiplication by the planetary gearset , at 7^{th} gear. The 6^{th} speed is direct, with improved mechanical efficiency of the transmission.

Alternatively for a 7-speed transmission the second driveshaft comprises driving gearwheels for 2^{nd}, 4^{th} and 6^{th} speeds, and the first driveshaft comprises driving gearwheels for 1^{st} reverse/2^{nd} reverse, 1^{st} and 3^{rd} speeds, wherein 2^{nd}, 4^{th} and 6^{th} speeds are provided by engaged clutch of corresponding gear pair, 1^{st} reverse, 1^{st} and 3^{rd} speeds are provided by engaged clutch of corresponding geartrain or gear pair and engaged lock-up clutch, 2^{nd} reverse speed is provided by engaged clutch of 1^{st} reverse/2^{nd} reverse geartrain and torque reaction from the rotor of the electric machine, 5^{th} speed is provided by engaged clutch, connecting the output shaft to the second driveshaft, and engaged lock-up clutch, and the 7^{th} speed is provided by engaged clutch, connecting the output shaft to the second driveshaft, and torque reaction from the rotor of the electric machine. The 7-speed transmission uses 6-speed equivalent geartrain, wherein direct gear is used twice - with engaged lock-up clutch at 5^{th} speed, and, with torque reaction from the rotor of the electric machine and speed multiplication by the planetary gearset, at 7^{th} speed. 5^{th} speed is direct, with improved mechanical efficiency of the transmission. The 7^{th} speed also has improved mechanical efficiency comparing to 3-shaft conventional mechanical transmissions, because there is only the planetary gearset in the powerflow.

According to the invention for a 6-speed transmission the first driveshaft comprises driving gearwheels for 2^{nd} and 4^{th} speeds, and the second driveshaft comprises driving gearwheels for 1^{st} reverse/2^{nd} reverse, 1^{st}, 3^{rd} and support/6^{th} speeds, wherein 2^{nd} and 4^{th} speeds are provided by engaged clutch of corresponding gear pair, 1^{st} reverse, 1^{st} and 3^{rd} speeds are provided by engaged clutch of corresponding geartrain or gear pair and engaged lock-up clutch, 2^{nd} reverse speed is provided by engaged clutch of corresponding geartrain or gear pair and torque reaction from the rotor of the electric machine, 6^{th} speed is provided by engaged clutch of support/6^{th} gear pair and torque reaction from the rotor of the electric machine, and 5^{th} speed is provided by engaged clutch, connecting the output shaft to the first driveshaft. This enables a 6-speed transmission with improved torque-fill capacity at 4^{th} to 5^{th} gearshift. Support/6^{th} speed gear is used for shift support at shifting gears 4^{th} to 6^{th}, and, with torque reaction from the rotor of the electric machine and speed multiplication by the planetary gearset, at 6^{th} gear. The 5^{th} speed is direct, with improved mechanical efficiency of the transmission.

Alternatively for a 6-speed transmission the first driveshaft comprises driving gearwheels for 2^{nd}, 4^{th} and 5^{th} speeds, and the second driveshaft comprises driving gearwheels for 1^{st} reverse/2^{nd} reverse, 1^{st} and 3^{rd} speeds, wherein 2^{nd}, 4^{th} and 5^{th} speeds are provided by engaged clutch of corresponding gear pair, 1^{st} reverse, 1^{st} and 3^{rd} speeds are provided by engaged clutch of corresponding geartrain or gear pair and engaged lock-up clutch, 2^{nd} reverse speed is provided by engaged clutch of 1^{st} reverse/2^{nd} reverse geartrain and torque reaction from the rotor of the electric machine, 6^{th} speed is provided by engaged clutch, connecting the output shaft to the second driveshaft, and torque reaction from the rotor of the electric machine. This enables a 6-speed transmission with improved torque-fill capacity at 4^{th} to 5^{th} gearshift. Support/6^{th} speed gear pair is used for shift support at shifting gears 4^{th} to 6^{th}, and, with torque reaction from the rotor of the electric machine and speed multiplication by the planetary gearset, at 6^{th} gear. The 6^{th} speed has improved mechanical efficiency comparing to 3-shaft conventional mechanical transmissions, because there is only planetary gearset in the powerflow.

In a 3-shaft design embodiment of the invention with reduced mounting length it is provided that the transmission comprises two driven shafts, wherein preferably at least one pinion on the driveshafts meshes with two gears on different driven shafts. The shared driving gears reduce weight, length and cost of the transmission. A reverse idler gear can be omitted, if the reverse geartrain is provided by meshing the driving pinion of the 1^{st} speed, or the driven gear of the 1^{st} speed on one of the driven shafts and driven gear of reverse speeds on another driven shaft.

In a 2.5-shaft design embodiment of the invention the reverse geartrain is provided by meshing the driving pinion of the 1^{st} speed, or driving pinion of reverse speeds, with driven reverse gear by additional idling shaft with at least one gear mesh. This enables a typical design of the reverse gear in 2.5-shaft design variation with a single driven shaft.

The transmission may comprise a park brake device, which locks one of the driven shafts to the housing.

Preferably the electric machine is embodied as multi-phase induction machine with squirrel-caged rotor. The induction machine is a simple and reliable contactless electric machine. The squirrel-caged rotor gives opportunity for internal power dissipation by slip, without overloading the control system, e.g. a multi-phase bridge inverter, which is connected to the stator coils. The rotor of the electric machine may comprise at least one cooling passage for liquid cooling of the squirrel cage. Forced liquid cooling is necessary for heavy modes like hill launch or repetitive launch in heavy traffic.

The drivetrain may be embodied as a geartrain with at least one intermediate idler. A geartrain is the stiffest type of drivetrain, which provides good controllability with reduced torque oscillations. Alternatively the drivetrain may be embodied as a chain drive. A chain drive is the most efficient, compact and light-weighting type of drivetrain.

According to the invention the electric machine is used for starting the cold engine up with simultaneous engaging of the powerflow from second driveshaft to the driven shaft, disengaging of a lock-up clutch being arranged between two gears on said driveshafts, applying the brake torque in the powerflow from the driveshaft to the wheels of the vehicle, and the electric machine is used for starting the warm engine up with engaging of the lock-up clutch and disengaging all other said clutches. This engine starting method makes possible to replace both belted starter-alternator - used for warm cranking - and conventional starter - used for cold cranking - with single electric machine and low-power control system, because the gear ratios from the electric machine to the crankshaft are different. In cold cranking mode the planetary gearset provides speed reduction. In warm cranking mode the planetary gearset is locked.

Preferably the transmission is controlled at least in one operating mode of the vehicle in a way that the powerflow from second driveshaft to the driven shaft is engaged by the corresponding clutch, a lock-up clutch being arranged between two gears on said driveshafts is disengaged, wherein the electric machine applies torque reaction, and the speed of the electric machine and the overall speed ratio of the transmission are defined by the sum of the power losses in the electric machine with its control system, and current instant power consumption from the battery with auxiliary electrical consumers of the vehicle.

There is an opportunity for additional speeds in the transmission. When one of the gearings is engaged on the 2^{nd} driveshaft (gears R, 1, 3, 5 for 7-speed version or R, 1, 3, support gear "SG" for 6-speed version), the rotor of the electric machine may be torque reaction from the by the stator field. By slow rotation of the rotor against the direction of the torque, the generated electric power may compensate the power losses in the electric drive and instant power consumption from the battery with auxiliary electrical consumers of the vehicle. Speed of the rotor and the speed ratio of the transmission are floating and depend on transmission load and instant power consumption. When there is no torque demand, the electric machine may be powered-off, disengaging the mechanical connection between the engine and the wheels.

The benefits of the inventive method are (1) added speed in the transmission; (2) opportunity to disengage the mechanical connection between the engine and the wheels to stop the engine in sailing modes; (3) power supply function converts a fraction of the losses in the electric drive to electric power; (4) high-torque and high-speed modes of the engine cranking.

The invention is explained below in closer detail by reference to the drawings, wherein:
- Fig. 1: is a schematic illustration of a multi speed transmission with seven forward gears and direct 6^{th} gear in accordance with a first embodiment of invention;
- Fig. 2: is a schematic illustration of a multi speed transmission with seven forward gears and direct 5^{th} gear in accordance with a second embodiment of invention;
- Fig. 3: schematically shows a shift pattern of a seven speed transmission in accordance with the first or second embodiment of the invention;
- Fig. 4: shows a powerflow chart example for base seven speed transmission;
- Fig. 5: shows a rotational speed chart example for base seven speed transmission;
- Fig. 6: shows a wheel torque chart example at shift 4 → 5 of the seven speed transmission;
- Fig. 7: shows a vehicle acceleration chart example at shift 4 → 5 of the seven speed transmission;
- Fig. 8: is a schematic illustration of a multi speed transmission with six forward gears and direct 5^{th} gear in accordance with a third embodiment of invention;
- Fig. 9: is a schematic illustration of a multi speed transmission with six forward gears and direct support gear in accordance with a fourth embodiment of invention;
- Fig. 10: is a schematic illustration of a multi speed transmission with seven forward gears and direct 6^{th} gear in accordance with a fifth embodiment of invention;
- Fig. 11: is a schematic illustration of a multi speed transmission with six forward gears and 5^{th} gear in accordance with a sixth embodiment of invention;
- Fig. 12: schematically shows a shift pattern of a six speed transmission in accordance with the third and fourth embodiments of the invention;
- Fig. 13: shows a powerflow chart example for base six speed transmission, and
- Fig. 14: shows a rotational speed chart example for base six speed transmission.

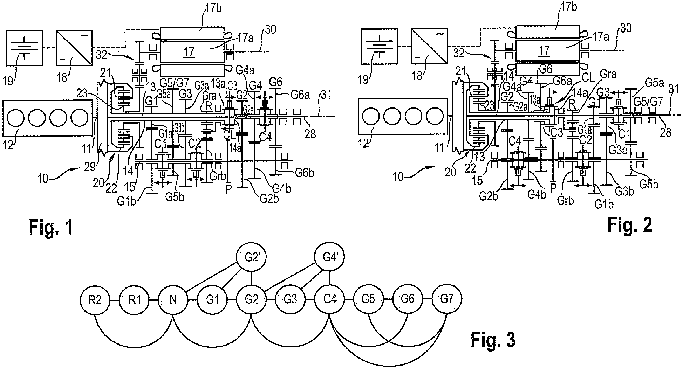

Fig. 1 shows a 7-speed transmission 10 for a vehicle comprising an input shaft 11 attached to a prime mover 12, for example a combustion engine, a first driveshaft 13 and a second driveshaft 14, wherein the driveshafts 13, 14 are arranged concentrically.

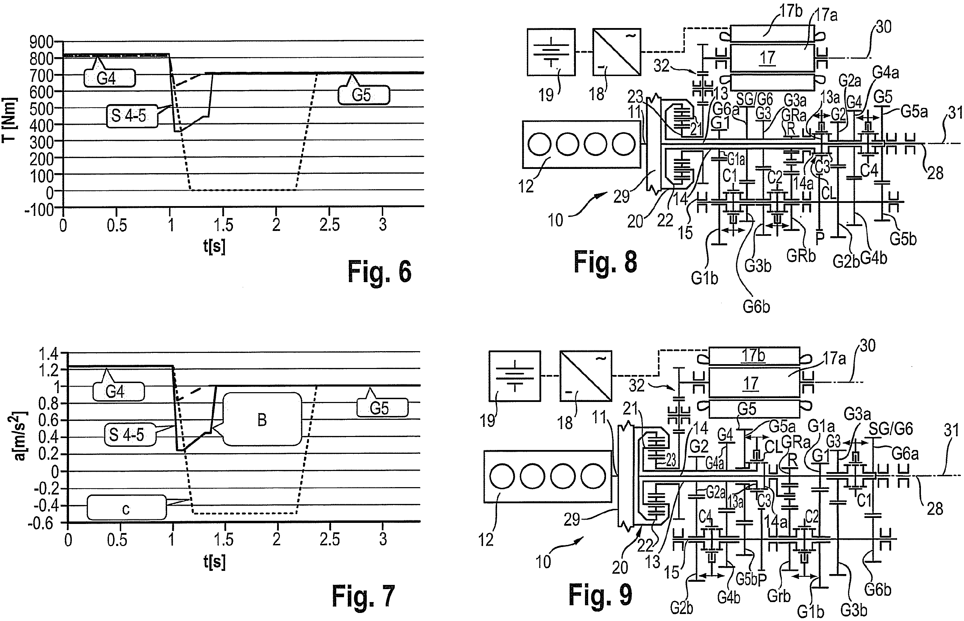

In the embodiments shown in Fig. 1, 8, 10 and 11 the first driveshaft 13 is mounted internally through the second driveshaft 14. In the embodiments shown in Fig. 2 and 9 the second driveshaft 14 is mounted internally through the first driveshaft 13.

As shown in Fig. 1 the first driveshaft 13 has a plurality of driving gearwheels G2a, G4a, G6 for 2^{nd}, 4^{th}, and 6^{th} speeds G2, G4, G6 meshing with corresponding driven gearwheels G2b, G4b, G6 of a first driven shaft 15. The second driveshaft 14 comprises a plurality of driving gearwheels GRa, G1a, G3a, G5a, for 1^{st} reverse/2^{nd} reverse R, 1^{st}, 3^{rd} and 5^{th}/7^{th} speeds G1, G3, G5, G7 meshing with corresponding driven gearwheels GRb, G1b, G3b, G5b of the first shaft 15.

The driven gearwheels GRb, G1b, G3b, G5b are engageable to the first driven shaft 15 with clutches C1, C2. The driving gearwheels G2a, G4a are engageable to the first driveshaft 13 with clutches C3, C4. Other gearwheels are fixed on corresponding shafts. The first driveshaft 13 is engageable to the output shaft 28 with clutch CL. So in dependence of the gears G1, G2, G3, G4, G5, G6 or G7 selected by shifting the clutches C1, C2, C3, C4 powerflows can be formed from the driveshafts 13, 14 to the driven shaft 15, 16 with different ratios.

In all embodiments the clutches C1, C2, C3, C4, CL may be designed as simple dog clutches. A vibration-damping device 29 may be arranged on the input shaft 11.

As shown in Fig. 1 the lock-up clutch CL and one of the clutches, e.g. the clutch C3 engaging G2a on the first driveshaft 13, may share a common shifting sleeve.

The transmission 10 comprises an electric machine 17, e.g., a multi-phase induction machine with a squirrel caged rotor 17a and a stator 17b, wherein the windings of the stator 17b are connected to a multi-phase bi-directional AC/DC power inverter 18 and a battery 19, e.g., a low-voltage battery, via fixed electrical connection. The rotor 17a may comprise means for forced cooling, e.g. at least one cooling passage for liquid cooling.

Further the transmission 10 comprises a planetary gearset 20 with three links 21, 22, 23, wherein the first link 21, e.g. a planet carrier, is connected to the first driveshaft 13 and the input shaft 11, the second link 22, e.g. a ring gear, is connected to the second driveshaft 14, and third link 23, e.g. a sun gear, is kinematically connected to the rotor 18 of the electric machine 17. The axis 30 of the rotor 17a of the electric machine 17 is arranged spaced apart from the axis 31 of the driveshafts 13, 14, wherein the third link 23 is connected to the rotor 17a of said electric machine 17 by a drivetrain 32. A speed ratio between the second link 22 and the third link 23 is negative for stopped first link 21.

A controllable lock-up clutch CL is arranged between the driving gears on the driveshafts 13, 14, and connects said driveshafts 13, 14 with each other. Reference numerals 13a and 14a indicate the splines for torque transfer from a shifting sleeve of the lock-up clutch CL. Said lock-up clutch CL may be formed by one of the clutches C3, C4.

According to the first embodiment shown in Fig. 1 the 2^{nd} and 4^{th} speeds G2, G4 are provided by engaged clutch C3, C4 of corresponding gear pair G2a, G2b; G4a, G4b. The 1^{st} reverse speed R1, 1^{st}, 3^{rd} and 5^{th} speeds G1, G3, G5 are provided by engaged clutch C1, C2 of corresponding geartrain GRa, GRb; G1a, G1b; G3a, G3b; G5a, G5b or gear pair and engaged lock-up clutch CL. The 2^{nd} reverse speed R2 is provided by engaged clutch C2 of 1^{st} reverse/2^{nd} reverse geartrain R and torque reaction from the rotor 17a of the electric machine 17, and 7^{th} speed G7 is provided by engaged clutch C1 of 5^{th}/7^{th} gear pair G5a, G5b and torque reaction from the rotor 17a of the electric machine 17. The 6^{th} speed is provided by engaged clutch C4 connecting the output shaft 28 to the first driveshaft 13.

The first embodiment of the transmission 10 shown in Fig. 1 comprises seven forward gears G1, G2, G3, G4, G5, G6, G7, two reverse gears R1, R2 and four clutches C1, C2, C3/CL, C4 with shifting sleeves. It enables operating conditions as follows:

| **Mode** | **C1** | **C2** | **C3/ CL** | **C4** | **Mode of Prime Mover 12** | **Mode of Electric Machine 17** | **Park brake P** |
|---|---|---|---|---|---|---|---|
| Cold engine cranking | R | | | | Motoring | Driving | On |
| Warm engine cranking | | | L | | Motoring | Driving | |
| Neutral | | | L | | Idling/driving | Idling/power supply | |
| Reverse 2 (R2) | | R | | | Driving | Braking at small speed | |
| R1-R2 shift (R1-R2) | | R | | | Driving | Braking | |
| Reverse 1 (R1) | | R | L | | Driving | Idling/power supply | |
| Reverse launch | | R | | | Driving | Braking | |
| Forward launch | L | | | | Driving | Braking | |
| Gear 1 (G1) | L | | L | | Driving | Idling/power supply | |
| 1-2 shift (S1-2) | L | | | | Driving | Braking | |
| Gear 2 (preselected 1) | L | | R | | Driving | Idling/power supply | |
| Gear 2 (G2)(G1-G3 preselection) | | | R | | Driving | Shaft speed synchronization | |
| Gear 2 (G2) (preselected G3) | | L | R | | Driving | Idling/power supply | |
| 2-3 shift (S2-3) | | L | | | Driving | Braking | |
| Gear 3 (G3) | | L | L | | Driving | Idling/power supply | |
| 3-4 shift (S3-4) | | L | | | Driving | Braking | |
| Gear 4 (G4) (preselected 3) | | L | | L | Driving | Idling/power supply | |
| Gear 4 (G4) (G3-G5 preselection) | | | | L | Driving | Shaft speed synchronization | |
| Gear 4 (G4) (G5 preselection) | R | | | L | Driving | Idling/power supply | |
| 4-5 shift (S4-5) | R | | | | Driving | Braking | |
| Gear 5 (G5) | R | | L | | Driving | Idling/power supply | |
| 5-6 shift (S5-6) | R | | | | Driving | Braking | |
| Gear 6 (G6) | R | | | R | Driving | Braking at small speed | |
| 6-7 shift (S6-7) | R | | | | Driving | Braking | |
| Gear 7 (G7) | R | | | | Driving | Braking at small speed | |
| Gear 2' (G2') | L | | | | Driving | Braking at small speed | |
| Gear 4' (G4') | | L | | | Driving | Braking at small speed | |

With reference to Fig. 1 in the shifting table shown above "L" indicates a left side position, and "R" indicates a right side position of the shifting sleeves of the clutches C1, C2, C3/CL, C4.

According to the second embodiment shown in Fig. 2 the first driveshaft 13 comprises driving gears G2a, G4a, G6a for 2^{nd}, 4^{th} and 6^{th} speeds G2, G4, G6, and the second driveshaft 14 comprises driving gearwheels GRa, G1a, G3a, G5a for 1^{st} reverse/2^{nd} reverse (R1, R2), 1^{st} (G1) and 3^{rd} (G3) speeds. The 2^{nd}, 4^{th} and 6^{th} speeds G2, G4, G6 are provided by engaged clutch C3, C4 of corresponding gear pair G2a, G2b; G4a, G4b, G6a, G6b, the 1^{st} reverse R1, 1^{st} and 3^{rd} speeds G1, G3 are provided by engaged clutch C1, C2 of corresponding geartrain or gear pair GRa, GRb; G1a, G1b; G3a, G3b and engaged lock-up clutch CL. The 2^{nd} reverse speed R2 is provided by engaged clutch C2 of 1^{st} reverse/2^{nd} reverse geartrain R and torque reaction from the rotor 17a of the electric machine 17. The 5^{th} speed G5 is provided by engaged clutch C1, connecting the output shaft 28 to the second driveshaft 14, and engaged lock-up clutch CL. The 7^{th} speed G7 is provided by engaged clutch C1, connecting the output shaft 28 to the second driveshaft 14, and torque reaction from the rotor 17a of the electric machine 17.

The second embodiment of the transmission 10 shown in Fig. 2 comprises seven forward gears G1, G2, G3/CL, G4, G5, G6, G7, two reverse gears R1, R2 and four clutches C1, C2, C3, C4 with shifting sleeves. It enables operating conditions as follows:

| **Mode** | **C1** | **C2** | **C3/ CL** | **C4** | **Mode of Prime Mover 12** | **Mode of Electric Machine 17** | **Park brake P** |
|---|---|---|---|---|---|---|---|
| Cold engine cranking | R | | | | Motoring | Driving | On |
| Warm engine cranking | | | R | | Motoring | Driving | |
| Neutral | | | R | | Idling/driving | Idling/power supply | |
| Reverse 2 (R2) | | L | | | Driving | Braking at small speed | |
| R1-R2 shift (R1-R2) | | L | | | Driving | Braking | |
| Reverse 1 (R1) | | L | R | | Driving | Idling/power supply | |
| Reverse launch | | L | | | Driving | Braking | |
| Forward launch | | R | | | Driving | Braking | |
| Gear 1 (G1) | | R | R | | Driving | Idling/power supply | |
| 1-2 shift (S1-2) | | R | | | Driving | Braking | |
| Gear 2 (preselected 1) | | R | | L | Driving | Idling/power supply | |
| Gear 2 (G2)(G1-G3 preselection) | | | | L | Driving | Shaft speed synchronization | |
| Gear 2 (G2) (preselected G3) | L | | | L | Driving | Idling/power supply | |
| 2-3 shift (S2-3) | L | | | | Driving | Braking | |
| Gear 3 (G3) | L | | R | | Driving | Idling/power supply | |
| 3-4 shift (S3-4) | L | | | | Driving | Braking | |
| Gear 4 (G4) (preselected 3) | L | | | R | Driving | Idling/power supply | |
| Gear 4 (G4) (G3-G5 preselection) | | | | R | Driving | Shaft speed synchronization | |
| Gear 4 (G4) (G5 preselection) | R | | | R | Driving | Idling/power supply | |
| 4-5 shift (S4-5) | R | | | | Driving | Braking | |
| Gear 5 (G5) | R | | R | | Driving | Idling/power supply | |
| 5-6 shift (S5-6) | R | | | | Driving | Braking | |
| Gear 6 (G6) | R | | L | R | Driving | Braking at small speed | |
| 6-7 shift (S6-7) | R | | | | Driving | Braking | |
| Gear 7 (G7) | R | | | | Driving | Braking at small speed | |
| Gear 2' (G2') | | R | | | Driving | Braking at small speed | |
| Gear 4' (G4') | L | | | | Driving | Braking at small speed | |

With reference to Fig. 2 in the shifting table shown above "L" indicates a left side position, and "R" indicates a right side position of the shifting sleeves of the clutches C1, C2, C3/CL, C4.

Fig. 3 shows a shift pattern of the seven speed transmission of the embodiments shown in Fig. 1, 2 and 10.

The speeds R1, G1, G2, G3, G4, G5 and G6 of the seven speed transmissions are engaged mechanically by dog clutches. The speeds G2, G4 and G6 are engaged by dog clutches, connecting the first driveshaft 13 to one of the driven shafts 15, 16 by one of the meshed gear pair, i.e. 2^{nd}, 4^{th} or 6^{th} gear pair G2a, G2b; G46a, G4b; G46a, G6b.

In detail the speeds R1, G1, G3 and G5 are engaged by the dog clutches, connecting the second driveshaft 14 to one of the driven shafts 15, 16 by one of the meshed gear pair R, 1^{st}, 3rd or 5th gear pair G1a, G1b, GRb; G1a, G1b; G3a, G3b; G5a, G5b and the lock-up clutch CL, interconnecting first and second driveshafts 13, 14.

The speeds R2, G2', G4' and G7 are engaged by dog clutches, connecting the second driveshaft 14 to one of the driven shafts 15, 16 by one of the meshed gear pair R, 1^{st}, 3rd or 5th gear pair G1a, G1b, GRb; G1a, G1b; G2a, G2b; G5a, G5b and torque reaction from the rotor 17a. This torque reaction transmits the torque from the first driveshaft 13 to the second driveshaft 14 through the planetary gearset 20. The speed of the rotor 17a should be small enough for high torque reaction. If the torque reaction is small enough, the ratio may vary, e.g. at low loads and sailing. In this case speeds R2, G2', G4' and G7 work like open-loop eCVT (electric continuous variable transmission) modes, and the electric machine 17 exchanges the electric energy with the battery 19 of the vehicle. For best torque fill capability, gear ratio of the speed G2' with locked rotor should be close to the ratio of the speed G2, and the ratio of the speed G4' with locked rotor should be close to the ratio of the speed G4.

The gear pair of the reverse gear R is engaged from reverse moving-off till gear R2.

The gear pair of the 1^{st} speed G1 is engaged from forward moving-off till 2^{nd} speed G2. When 2^{nd} speed G2 is engaged after 1^{st} speed G1, the clutch C1 disengages the connection to the gear pair G1a, G1b of the 1^{st} speed G1, then the electric machine 17 speeds-up the shaft for synchronizing the speeds, and then relevant clutch C2 preselects 3^{rd} speed. The vehicle is still running on 2^{nd} speed. To shift to 3^{rd} speed G3, the electric machine 17 applies negative torque. The torque on the C2 clutch increases and the torque on the C3 clutch reduces proportionally to the torque, applied to the sun gear 23 by the electric machine 17. When the clutch C3 of the 2^{nd} speed G2 is unloaded, it is disengaged. In this way the torque handover phase takes place. Then torque-filled speed synchronization phase is performed. The rotor 17a of the electrical machine 17 is decelerated, and the input shaft decelerates correspondingly until the driveshafts 13 and 14 are synchronized. Then, the lock-up clutch CL connects the driveshafts 13 and 14. After that, torque reaction by the electric machine 17 is released. The torque on the C3 clutch reduces and the torque on the CL clutch increases proportionally. Torque fill is provided by the torque reaction of the rotor 17a. The torque-fill capacity is determined by the power on the shaft of the electric machine 17, which is proportional to the rotor speed. The lower is the speed of the rotor 17a, the higher is the torque-fill capacity.

Speed preselection is performed at 2^{nd} and 4^{th} speeds. The gear pair of the 1^{st} speed provides launch and torque-filled shifts to 1^{st} and 2^{nd} speeds. On the 2^{nd} speed the preselection between 1^{st} and 3^{rd} speeds is done. The 3^{rd} speed provides torque-filled shifts to 2^{nd}, 3^{rd} and 4^{th} speeds. On the 4^{th} speed the preselection between 3^{rd} and 5^{th} speeds is done. The 5^{th} speed provides torque-filled shifts to 4^{th}, 5^{th}, 6^{th} and 7^{th} speeds. Speed preselection is similar to speed preselection in conventional DCTs (double clutch transmission). But in difference to conventional DCTs no friction synchronizers are required, thanks to speed synchronization function of the electric machine 17.

One of the speeds R1, G1, G3 or G5 with locked park brake P or vehicle wheel brakes may be used for cold engine cranking. In this mode the power split device provides speed reduction function, multiplying the torque of the electric machine 17 delivered to the cold combustion engine. Park brake P or wheel brakes provide torque reaction of the second link 22 of the planetary gear 20. 5^{th} speed G5 is preferred for cold cranking to reduce the load on the park brake P or wheel brakes.

Another option of cold cranking is simultaneous engagement of any two clutches, engaging the gear pairs or geartrain of gears R1, G1, G3 or G5. In this case the second driveshaft 14 is locked, providing torque reaction to the second link 22 of the planetary gear 20.

The lock-up clutch CL engaged may be used for warm engine cranking. Other dog clutches C1, C2, C3, C4 should be disengaged. The planetary gear 20 is locked and provides direct torque transfer. Warm engine cranking is available during sailing of the vehicle.

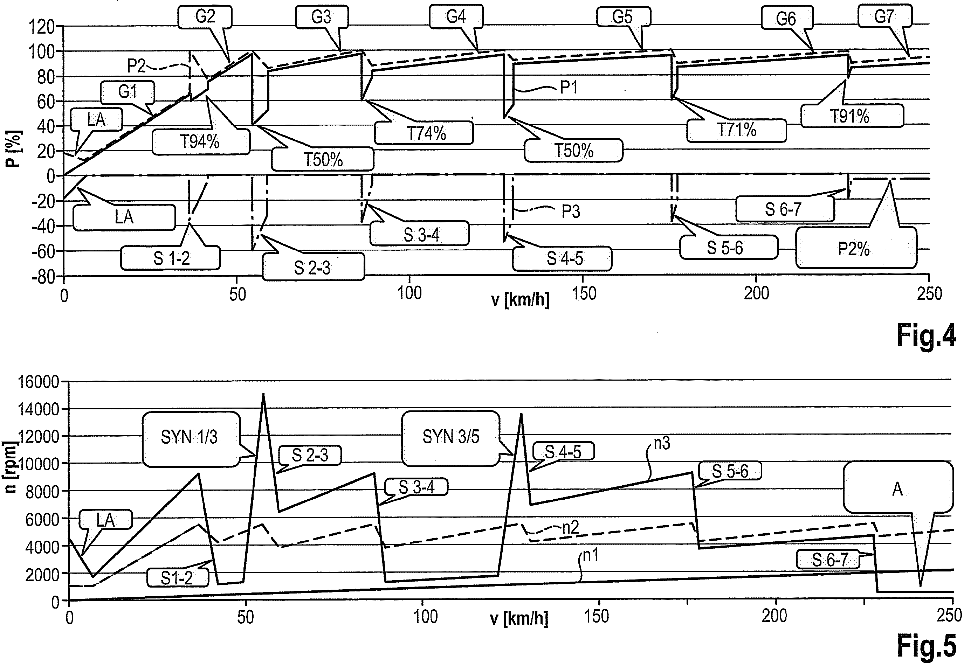

Fig. 4 shows a powerflow chart example for base seven speed transmission in accordance with the first or second embodiment. In the chart the wheel power P1, the power P2 of the prime mover 12 (combustion engine) and the power P3 of the electric machine 17 are drafted in dependence of the speed v of vehicle. Fig. 5 shows a rotational speed chart example for such seven speed transmission with wheel rotational speed n1, rotational speed n2 of the prime mover 12 and rotational speed n3 of the electric machine 17 in dependence of the speed v of vehicle. In this charts "LA" indicated the launch of the vehicle. During launch LA and during each of the gear shifts S1-2, S2-3, S3-4, S4-5, S5-6, S6-7 the electric machine 17 absorbs power in order to provide torque fill during shifting. In Fig. 4 T94%, T50%, T74%, T50%, T71% and T91% indicate the torque fill level during shifting by absorbing power with the electric machine 17. After gear shift S6-7 the electric machine 17 generates constant electric power P2%, for example 1 ... 2 % of engine rated power. As indicated with reference numeral "A" in Fig. 5, in this operating range the electric machine 17 is rotating at slow rotational speed n3, providing torque reaction and electric power generation. The peaks SYN 1/3 and SYN 3/5 of the rotational speed n3 shown in Fig. 4 indicate shaft speed synchronization for preselecting 1^{st} gear G1 or 3^{rd} gear G3, and 3^{rd} gear G3 or 5^{th} gear G5, respectively.

Fig. 6 and 7 show a torque chart and an acceleration chart of gear shifting S 4-5 in dependence of the time t, of a transmission according to the present invention compared with a conventional manual transmission/automated manual transmission and an automatic/DCT transmission. Lines T1 and a1 indicate the course of the torque and the acceleration, respectively, during shifting with a conventional manual transmission/automated manual transmission, lines T2 and a2 during shifting with an automatic/DCT transmission. T3 and a3 shows the characteristics of the torque and the acceleration with 50% torque fill during shifting with a transmission 10 shown in Fig. 1 or 2. The deceleration of line a2 indicated with "C" caused by a long impact with conventional manual transmission/automated manual transmission result in a bad driver feeling. In contrast to this line a3 show only a reduced acceleration and a short shift impact resulting in an acceptable driver feeling.

Fig. 8 shows a 6-speed transmission 10 for a vehicle wherein the first driveshaft 13 comprises driving gearwheels G2a, G4a for 2^{nd}, and 4^{th} speeds G2, G4, and the second driveshaft 14 comprises driving gearwheels GRa, G1a, G3a, G6a for 1^{st} reverse/2^{nd} reverse R1, R2, 1^{st}, 3^{rd} and support/6^{th} speeds G1, G3, SG/G6. The 2^{nd}, and 4^{th} speeds G2, G4 are provided by an engaged clutch C3, C4 of corresponding gear pairs G2a, G2b; G4a, G4b. The 1^{st} reverse R1 and 3^{rd} G3 speeds are provided by an engaged clutch C2 of corresponding geartrain or gear pair GRa, GRb; G1a, G1b; G3a, G3b, and the engaged lock-up clutch CL. The 2^{nd} reverse speed R2 is provided by engaged clutch C2 of corresponding geartrain or gear pair GRa, GRb; G1a, G1b and torque reaction from the rotor 17a of the electric machine 17. The 6^{th} speed is provided by the engaged clutch C1 of a support/6^{th} gear pair G6a, G6b and the torque reaction from the rotor 17a of the electric machine 17. The 5^{th} speed is provided by engaged clutch C4, connecting the output shaft 28 to the first driveshaft 13.

The third embodiment of the transmission 10 shown in Fig. 8 comprises six forward gears G1, G2, G3, G4, G5, G6, two reverse gears R1, R2 and four clutches C1, C2, C3/CL and C4 with shifting sleeves. It enables operating conditions as follows:

| **Mode** | **C1** | **C2** | **C3/ CL** | **C4** | **Mode of Prime Mover 12** | **Mode of Electric Machine 17** | **Park brake P** |
|---|---|---|---|---|---|---|---|
| Cold engine cranking | | | | | Motoring | Driving | On |
| Warm engine cranking | | | | L | Motoring | Driving | |
| Neutral | | | | L | Idling/driving | Idling/power supply | |
| Reverse 2 (R2) | | R | | | Driving | Braking at small speed | |
| R1-R2 shift (R1-R2) | | R | | | Driving | Braking | |
| Reverse 1 (R1) | | R | L | | Driving | Idling/power supply | |
| Reverse launch | | R | | | Driving | Braking | |
| Forward launch | L | | | | Driving | Braking | |
| Gear 1 (G1) | L | | L | | Driving | Idling/power supply | |
| 1-2 shift (S1-2) | L | | | | Driving | Braking | |
| Gear 2 (preselected 1) | | L | | R | Driving | Idling/power supply | |
| Gear 2 (G2)(G1-G3 preselection) | | | R | | Driving | Shaft speed synchronization | |
| Gear 2 (G2) (preselected G3) | | L | R | | Driving | Idling/power supply | |
| 2-3 shift (S2-3) | | L | | | Driving | Braking | |
| Gear 3 (G3) | | L | L | | Driving | Idling/power supply | |
| 3-4 shift (S3-4) | | L | | | Driving | Braking | |
| Gear 4 (G4) (preselected G3) | | L | | L | Driving | Idling/power supply | |
| Gear 4 (G4) (G3-G5 preselection) | | | | L | Driving | Shaft speed synchronization | |
| Gear 4 (G4) (preselected G5) | R | | | L | Driving | Idling/power supply | |
| 4-5 shift (S4-5) | R | | | | Driving | Braking | |
| Gear 5 (G5) | R | | | R | Driving | Idling/power supply | |
| 5-6 shift (S5-6) | R | | | | Driving | Braking | |
| Gear 6 (G6) | R | | | | Driving | Braking at small speed | |
| Gear 2' (G2') | L | | | | Driving | Braking at small speed | |
| Gear 4' (G4') | | L | | | Driving | Braking at small speed | |

With reference to Fig. 8 in the shifting table shown above "L" indicates a left side position, and "R" indicates a right side position of the shifting sleeves of the clutches C1, C2, C3/CL, C4.

According to the fourth embodiment shown in Fig. 9 the first driveshaft 13 comprises driving gears G2a, G4a, G5a for 2^{nd}, 4^{th} and 5^{th} speeds G2, G4, G5. The second driveshaft 14 comprises driving gearwheels GRa, G1a, G3a for 1^{st} reverse/2^{nd} reverse R1, R2, 1^{st} G1 and 3^{rd} (G3) speeds. The 2^{nd}, 4^{th} and 5^{th} speeds G2, G4, G5 are provided by engaged clutch C3, C4 of corresponding gear pair G2a, G2b; G4a, G4b, G5a, G5b. The 1^{st} reverse R1, 1^{st} and 3^{rd} speeds G1, G3 are provided by engaged clutch C1, C2 of corresponding geartrain or gear pair GRa, GRb; G1a, G1b; G3a, G3b and engaged lock-up clutch CL. The 2^{nd} reverse speed R2 is provided by engaged clutch C2 of 1^{st} reverse/2^{nd} reverse geartrain R and torque reaction from the rotor 17a of the electric machine 17. The 6^{th} speed (G6) is provided by engaged lock-up clutch CL, connecting the output shaft 28 to the second driveshaft 14, and torque reaction from the rotor 17a of the electric machine 17.

The fourth embodiment of the transmission 10 shown in Fig. 9 comprises six forward gears G1, G2, G3, G4, G5, G6, two reverse gears R1, R2 and four clutches C1, C2, C3/CL, C4 with shifting sleeves. It enables operating conditions as follows:

| **Mode** | **C1** | **C2** | **C3/ CL** | **C4** | **Mode of Prime Mover 12** | **Mode of Electric Machine 17** | **Park brake P** |
|---|---|---|---|---|---|---|---|
| Cold engine cranking | R | | | | Motoring | Driving | On |
| Warm engine cranking | | | R | | Motoring | Driving | |
| Neutral | | | R | | Idling/driving | Idling/power supply | |
| Reverse 2 (R2) | | L | | | Driving | Braking at small speed | |
| R1-R2 shift (R1-R2) | | L | | | Driving | Braking | |
| Reverse 1 (R1) | | L | R | | Driving | Idling/power supply | |
| Reverse launch | | L | | | Driving | Braking | |
| Forward launch | | R | | | Driving | Braking | |
| Gear 1 (G1) | | R | R | | Driving | Idling/power supply | |
| 1-2 shift (S1-2) | | R | | | Driving | Braking | |
| Gear 2 (preselected G1) | | R | | L | Driving | Idling/power supply | |
| Gear 2 (G2)(G1-G3 preselection) | | | | L | Driving | Shaft speed synchronization | |
| Gear 2 (G2) (preselected G3) | L | | | L | Driving | Idling/power supply | |
| 2-3 shift (S2-3) | L | | | | Driving | Braking | |
| Gear 3 (G3) | L | | R | | Driving | Idling/power supply | |
| 3-4 shift (S3-4) | L | | | | Driving | Braking | |
| Gear 4 (G4) (preselected G3) | L | | | R | Driving | Idling/power supply | |
| Gear 4 (G4) (G3-G5 preselection) | | | | R | Driving | Shaft speed synchronization | |
| Gear 4 (G4) (preselected SG) | R | | | R | Driving | Idling/power supply | |
| 4-5 shift (S4-5) | R | | | | Driving | Braking | |
| Gear 5 (G5) | R | | L | | Driving | Idling/power supply | |
| 5-6 shift (S5-6) | R | | | | Driving | Braking | |
| Gear 6 (G6) | R | | | | Driving | Braking at small speed | |
| Gear 2' (G2') | | R | | | Driving | Braking at small speed | |
| Gear 4' (G4') | L | | | | Driving | Braking at small speed | |

With reference to Fig. 9 in the shifting table shown above "L" indicates a left side position, and "R" indicates a right side position of the shifting sleeves of the clutches C1, C2, C3/CL, C4.

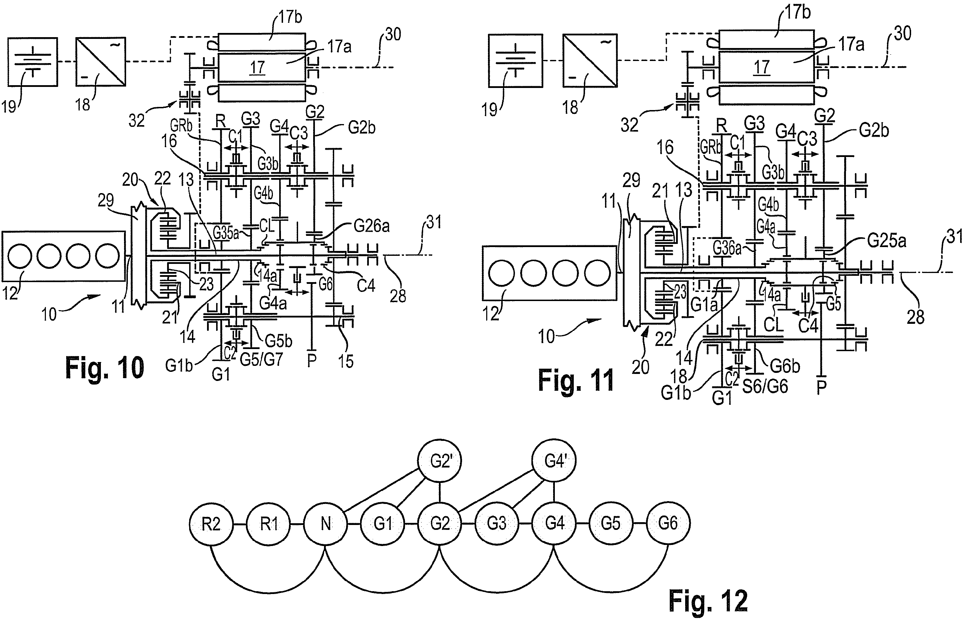

Figs. 10 shows a 7-speed transmission 10 for a vehicle comprising an input shaft 11 attached to a prime mover 12, for example a combustion engine, a first driveshaft 13 and a second driveshaft 14, wherein the driveshafts 13, 14 are arranged concentrically. The first driveshaft 13 is mounted internally through the second driveshaft 14.

In difference to the embodiments described above the transmission 10 shown in Fig. 10 comprises two driven shafts 15, 16, wherein the reverse geartrain R is provided by meshing the driven gear G1b of the 1^{st} speed G1 on the first driven shafts 15 and the driven gear GRb of reverse speed R on the second driven shaft 16. Further the reverse geartrain R may be provided by meshing the driving pinion G1a of the 1^{st} speed G1, or driving pinion of reverse speeds R1, R2, with driven reverse gear GRb by additional idling shaft with at least one gear mesh.

At least one driving pinion on a driving shaft 13, 14, e.g., the driving gear G35a of the second driveshaft 14 meshes with two gears G3b, G5b on different driven shafts 15, 16.

The first driveshaft 13 has a plurality of driving gearwheels G26a, G4a for 2^{nd} and 4^{th} speeds G2, G4 meshing with corresponding driven gearwheels G2b, G4b of a second driven shaft 16. The second driveshaft 14 comprises a plurality of driving gearwheels G1a, G35a for 1^{st} reverse/2^{nd} reverse R, 1^{st}, 3^{rd} and 5^{th}/7^{th} speeds G1, G3, G5, G7 meshing with corresponding driven gearwheels GRb, G1b, G3b, G5b of the first driven shaft 15 or second driven shaft 16.

The driven gearwheels GRb, G2b, G3b, G4b are engageable to the second driven shaft 16 with clutches C1, C3. The driven gearwheels G1b, G5b are engageable to the first driven shaft 15 with clutch C2. The first driveshaft 13 is engageable to the output shaft 28 with clutch C4. So in dependence of the gears G1, G2, G3, G4, G5, G6 or G7 selected by shifting the clutches C1, C2, C3, C4 powerflows can be formed from the driveshafts 13, 14 to the driven shaft 15, 16 with different ratios.

As in the embodiments described above, the transmission 10 shown in Fig. 10 comprises the electric machine 17, e.g., a multi-phase induction machine with the squirrel caged rotor 17a and the stator 17b, wherein the windings of the stator 17b are connected to the multi-phase bi-directional AC/DC power inverter 18 and the battery 19, e.g., a low-voltage battery, via fixed electrical connection. The rotor 17a may comprise means for forced cooling, e.g. at least one cooling passage for liquid cooling.

Further the transmission 10 comprises the planetary gearset 20 with three links 21, 22, 23, wherein the first link 21, e.g. a planet carrier, is connected to the first driveshaft 13 and the input shaft 11, the second link 22, e.g. the ring gear, is connected to the second driveshaft 14, and the third link 23, e.g. the sun gear, is kinematically connected to the rotor 18 of the electric machine 17. The axis 30 of the rotor 17a of the electric machine 17 is arranged spaced apart from the axis 31 of the driveshafts 13, 14, wherein the third link 23 is connected to the rotor 17a of said electric machine 17 by the drivetrain 32. A speed ratio between the second link 22 and the third link 23 is negative for stopped first link 21.

A controllable lock-up clutch CL is arranged between the gearwheel G4a and G26a on the first driveshaft 13, connecting the driveshafts 13, 14 with each other. The lock-up clutch CL may be combined with clutch C4.

According to the fifth embodiment shown in Fig. 10, the 2^{nd} and the 4^{th} speeds G2, G4 are provided by engaged clutch C3 of corresponding gear pair G26a, G2b; G4a, G4b. The 1^{st} reverse R1, the 1^{st} G1, 3^{rd} G3 and 5^{th} G5 speeds are provided by engaged clutch C1, C2 of corresponding geartrain or gear pair G1a, GRb; G1b; G35a, G3b; G5b, and engaged lock-up clutch CL. The 2^{nd} reverse speed R2 is provided by engaged clutch C1 of 1^{st} reverse/2^{nd} reverse geartrain R and torque reaction from the rotor 17a of the electric machine 17. The 7^{th} speed is provided by engaged clutch C2 of 5^{th}/7^{th} gear pair G35a, G5b and torque reaction from the rotor 17a of the electric machine 17. The 6^{th} speed is provided by engaged clutch C4 connecting the output shaft 28 to the first driveshaft 13.

The fifth embodiment of the transmission 10 shown in Fig. 10 comprises seven forward gears G1, G2, G3, G4, G5, G6, G7, two reverse gears R1, R2 and four clutches C1, C2, C3, C4/CL with shifting sleeves. It enables operating conditions as follows:

| **Mode** | **C1** | **C2** | **C3** | **C4/ CL** | **Mode of Prime Mover 12** | **Mode of Electric Machine 17** | **Park brake P** |
|---|---|---|---|---|---|---|---|
| Cold engine cranking | | R | | | Motoring | Driving | On |
| Warm engine cranking | | | | L | Motoring | Driving | |
| Neutral | | | | L | Idling/driving | Idling/power supply | |
| Reverse 2 (R2) | L | | | | Driving | Braking at small speed | |
| R1-R2 shift (R1-R2) | L | | | | Driving | Braking | |
| Reverse 1 (R1) | L | | | L | Driving | Idling/power supply | |
| Reverse launch | L | | | | Driving | Braking | |
| Forward launch | | L | | | Driving | Braking | |
| Gear 1 (G1) | | L | | L | Driving | Idling/power supply | |
| 1-2 shift (S1-2) | | L | | | Driving | Braking | |
| Gear 2 (preselected G1) | | L | R | | Driving | Idling/power supply | |
| Gear 2 (G2)(G1-G3 preselection) | | | R | | Driving | Shaft speed synchronization | |
| Gear 2 (G2) (preselected G3) | R | | R | | Driving | Idling/power supply | |
| 2-3 shift (S2-3) | R | | | | Driving | Braking | |
| Gear 3 (G3) | R | | | L | Driving | Idling/power supply | |
| 3-4 shift (S3-4) | R | | | | Driving | Braking | |
| Gear 4 (G4) (preselected G3) | R | | L | | Driving | Idling/power supply | |
| Gear 4 (G4) (G3-G5 preselection) | | | L | | Driving | Shaft speed synchronization | |
| Gear 4 (G4) (preselected G5) | | R | L | | Driving | Idling/power supply | |
| 4-5 shift (S4-5) | | R | | | Driving | Braking | |
| Gear 5 (G5) | | R | | L | Driving | Idling/power supply | |
| 5-6 shift (S5-6) | | R | | | Driving | Braking | |
| Gear 6 (G6) | | R | | R | Driving | Braking at small speed | |
| 6-7 shift (S6-7) | | R | | | Driving | Braking | |
| Gear 7 (G7) | | R | | | Driving | Braking at small speed | |
| Gear 2' (G2') | | L | | | Driving | Braking at small speed | |
| Gear 4' (G4') | R | | | | Driving | Braking at small speed | |

With reference to Fig. 10 in the shifting table shown above "L" indicates a left side position, and "R" indicates a right side position of the shifting sleeves of the clutches C1, C2, C3, C4/CL.

Fig. 11 shows a 6-speed transmission 10 for a vehicle comprising an input shaft 11 attached to a prime mover 12, for example a combustion engine, a first driveshaft 13 and a second driveshaft 14, wherein the driveshafts 13, 14 are arranged concentrically. The first driveshaft 13 is mounted internally through the second driveshaft 14.

Analogous to Fig. 10 the transmission 10 shown in Fig. 11 comprises two driven shafts 15, 16, wherein the reverse geartrain R is provided by meshing the driven gear G1b of the 1^{st} speed G1 on the first driven shafts 15 and the driven gear GRb of reverse speed R on the second driven shaft 16. The driving gear G36a of the second driveshaft 14 meshes with two gears G3b, G6b on different driven shafts 15, 16.

The first driveshaft 13 has a plurality of driving gearwheels G25a, G4a for 2^{nd} and 4^{th} speeds G2, G4 meshing with corresponding driven gearwheels G2b, G4b of the second driven shaft 16. The second driveshaft 14 comprises a plurality of driving gearwheels G1a, G36a for 1^{st} reverse/2^{nd} reverse R, 1^{st}, 3^{rd} and support/6^{th} speeds G1, G3, G5, SG/G6 meshing with corresponding driven gearwheels GRb, G1b, G3b, G6b of the first driven shaft 15 or second driven shaft 16.

The driven gearwheels GRb, G2b, G3b and G4b are engageable to the second driven shaft 16 with clutches C1, C3. The driven gearwheels G1b, G6b are engageable to the first driven shaft 15 with clutch C2. The first driveshaft 13 is engageable to the output shaft 28 with clutch C4. So in dependence of the gears G1, G2, G3, G4, G5, G6 selected by shifting the clutches C1, C2, C3, C4 powerflows can be formed from the driveshafts 13, 14 to the driven shaft 15, 16 with different ratios.

The arrangements of the electric machine 17 and planetary gearset 20 are similar to Fig. 10.

A controllable lock-up clutch CL is arranged between the gearwheels G4a and G5a on the first driveshaft 13 and driveshafts 13, 14 and connects the driveshafts 13, 14 with each other. As shown in Fig. 10 the lock-up clutch CL may be combined with clutch C4.

According to the fifth embodiment shown in Fig. 11 the 2^{nd} and 4^{th} speeds G2, G4 are provided by engaged clutch C3 of corresponding gear pair G2a, G2b; G4a, G4b. The 1^{st} reverse R1, 1^{st} and 3^{rd} speeds G1, G3 are provided by engaged clutch C1, C2 of corresponding geartrain or gear pair GRa, GRb; G1a, G1b; G3a, G3b, and engaged lock-up clutch CL. The 2^{nd} reverse speed R2 is provided by engaged clutch C1 of the 1^{st} reverse/2^{nd} reverse geartrain R and torque reaction from the rotor 17a of the electric machine 17. The 6^{th} speed is provided by engaged clutch C2 of support/6th gear pair G6a, G6b and torque reaction from the rotor 17a of the electric machine 17. The 5^{th} speed is provided by engaged clutch C4, connecting the output shaft 28 to the first driveshaft 13.

The sixth embodiment of the transmission 10 shown in Fig. 11 comprises six forward gears G1, G2, G3, G4, G5, G6, two reverse gears R1, R2 and four clutches C1, C2, C3, C4/CL with shifting sleeves. It enables operating conditions as follows:

| **Mode** | **C1** | **C2** | **C3** | **C4/ CL** | **Mode of Prime Mover 12** | **Mode of Electric Machine 17** | **Park brake P** |
|---|---|---|---|---|---|---|---|
| Cold engine cranking | | R | | | Motoring | Driving | On |
| Warm engine cranking | | | | L | Motoring | Driving | |
| Neutral | | | | L | Idling/driving | Idling/power supply | |
| Reverse 2 (R2) | L | | | | Driving | Braking at small speed | |
| R1-R2 shift (R1-R2) | L | | | | Driving | Braking | |
| Reverse 1 (R1) | L | | | L | Driving | Idling/power supply | |
| Reverse launch | L | | | | Driving | Braking | |
| Forward launch | | L | | | Driving | Braking | |
| Gear 1 (G1) | | L | | L | Driving | Idling/power supply | |
| 1-2 shift (S1-2) | | L | | | Driving | Braking | |
| Gear 2 (preselected G1) | | L | R | | Driving | Idling/power supply | |
| Gear 2 (G2)(G1-G3 preselection) | | | R | | Driving | Shaft speed synchronization | |
| Gear 2 (G2) (preselected G3) | R | | R | | Driving | Idling/power supply | |
| 2-3 shift (S2-3) | R | | | | Driving | Braking | |
| Gear 3 (G3) | R | | | L | Driving | Idling/power supply | |
| 3-4 shift (S3-4) | R | | | | Driving | Braking | |
| Gear 4 (G4) (preselected G3) | R | | L | | Driving | Idling/power supply | |
| Gear 4 (G4) (G3-G5 preselection) | | | L | | Driving | Shaft speed synchronization | |
| Gear 4 (G4) (preselected support gear SG) | | R | L | | Driving | Idling/power supply | |
| 4-5 shift (S4-5) | | R | | | Driving | Braking | |
| Gear 5 (G5) | | R | | R | Driving | Idling/power supply | |
| 5-6 shift (S5-6) | | R | | | Driving | Braking | |
| Gear 6 (G6) | | R | | | Driving | Braking at small speed | |
| Gear 2' (G2') | | L | | | Driving | Braking at small speed | |
| Gear 4' (G4') | R | | | | Driving | Braking at small speed | |

With reference to Fig. 11 in the shifting table shown above "L" indicates a left side position, and "R" indicates a right side position of the shifting sleeves of the clutches C1, C2, C3, C4/CL.

Fig. 12 shows a shift pattern of the six speed transmission of the embodiments shown in Fig. 8, 9, and 11.

The speeds R1, G1, G2, G3, G4 and G5 of the six speed transmissions are engaged mechanically by dog clutches.

In detail the speeds G2, G4 and G5 are engaged by dog clutches, connecting the first driveshaft 13 to one of the driven shafts 15, 16 by one of the meshed gear pair 2^{nd}, 4^{th} or 5^{th} gear pair G2a, G2b; G45a, G4b; G45a, G5b.

The speeds R1, G1 and G3 are engaged by dog clutches, too, connecting the second driveshaft 14 to one of the driven shafts 15, 16 by one of the meshed gear pair R, 1^{st}, 3rd or "SG" support gear pair G1a, G1b, GRb; G1a, G1b; G3a, G3b; G6a, G6b and the lock-up clutch CL, interconnecting first and second driveshafts 13, 14.

The speeds R2, G2', G4' and G6 are engaged by dog clutches, connecting the second driveshaft 14 to one of the driven shafts 15, 16 by one of the meshed gear pair (R, 1st, 3rd or "SG" support gear pair G1a, G1b, GRb; G1a, G1b; G3a, G3b; G6a, G6b) and torque reaction from the rotor 17a. This torque reaction transmits the torque from the first driveshaft 13 to the second driveshaft 14 through the planetary gearset 20. The speed of the rotor 17a should be small enough for high torque reaction. If the rotor 17a is unlocked, the ratio may vary, for example at low loads and sailing. In this case speeds G2', G4' and G6 work like open-loop eCVT modes, and the electric machine 17 exchanges the electric energy with the battery 19. For best torque fill capability, gear ratio of the speed G2' should be close to the ratio of the speed G2, and the ratio of the speed G4' should be close to the ratio of the speed G4.

The gear pair of the reverse gear R is engaged from reverse moving-off till gear R2.

The gear pair of the 1^{st} speed G1 is engaged from forward moving-off till 2^{nd} speed G2. When 2^{nd} speed G2 is engaged after 1^{st} speed G1, the clutch C1 disengages the connection to the gear pair G1a, G1b of the 1^{st} speed G1, then the electric machine 17 speeds-up the shaft for synchronizing the speeds, and then relevant clutch C2 preselects 3^{rd} speed G3. The vehicle is still running on 2^{nd} speed G2. To shift to 3^{rd} speed G3, the electric machine 17 applies negative torque. The torque on the C2 clutch increases and the torque on the C3 clutch reduces proportionally to the torque, applied to the sun gear 23 by the electric machine. When the clutch C3 of the 2nd speed G2 is unloaded, it is disengaged. In this way the torque handover phase takes place. Then torque-filled speed synchronization phase is performed. The rotor 17a of the electrical machine is decelerated, and the input shaft decelerates correspondingly until the driveshafts 13 and 14 are synchronized. Then, the lock-up clutch CL connects the driveshafts 13 and 14. After that, torque reaction by the electric machine 17 is released. The torque on the C3 clutch reduces and the torque on the CL clutch increases proportionally. Torque fill is provided by the torque reaction of the rotor 17a. The torque-fill capacity is determined by the power on the shaft of the electric machine 17, which is proportional to the rotor speed. The lower is the speed of the rotor 17a, the higher is the torque-fill capacity.

Speed preselection is performed at 2^{nd} and 4^{th} speeds. The gear pair of the 1^{st} speed provides launch and torque-filled shifts to 1^{st} and 2^{nd} speeds. On the 2^{nd} speed the preselection between 1^{st} and 3^{rd} speeds is done. The 3^{rd} speed provides torque-filled shifts to 2^{nd}, 3^{rd} and 4^{th} speeds. On the 4^{th} speed the preselection between 3^{rd} and support "SG" speeds is done. The support "SG" speed provides torque-filled shifts to 4^{th}, 5^{th} and 6^{th} speeds. Speed preselection is similar to speed preselection in conventional DCTs (double clutch transmission). But in difference to conventional DCTs no friction synchronizers are required, thanks to speed synchronization function of the electric machine 17.

One of the speeds R1, G1, G3 or "SG" support gear with locked park brake P or vehicle wheel brakes may be used for cold engine cranking. In this mode the power split device provides speed reduction function, multiplying electric machine 17 torque delivered to the cold combustion engine. Park brake P or wheel brakes provide torque reaction of the 2^{nd} link 22 of the planetary gear 20. "SG" support gear is preferred for cold cranking to reduce the load on the park brake (wheel brakes).

Another option of cold cranking is simultaneous engagement of any two clutches, engaging the gear pairs or geartrain of gears R1, G1, G3 or SG. In this case the second driveshaft 14 is locked, providing torque reaction to the second link 22 of the planetary gear 20.

The lock-up clutch CL engaged may be used for warm engine cranking. Other dog clutches C1, C2, C3, C4 should be disengaged. The planetary gear 20 is locked and provides direct torque transfer. Warm engine cranking is available during sailing of the vehicle.

The main difference to 7-speed layouts shown in Fig. 1, 2 and 10 is that due to one excluded gear the ratio of "SG" support gear can be optimized to improve torque fill capability at shift 4-5, which is the most critical for driver comfort in some driving conditions, e.g. driving uphill at highway with high engine torque. Electric machine peak speed at 4th gear G4 is also reduced, so, shaft speed-up synchronization is faster and requires less energy from the battery 19.

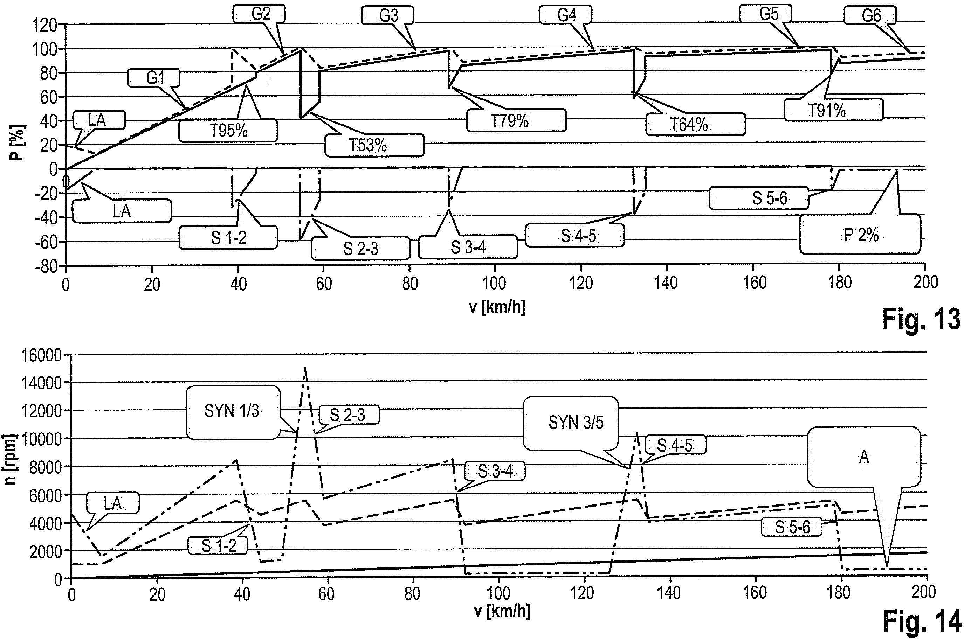

Fig. 13 shows a powerflow chart example for base six speed transmission in accordance with the first or second embodiment. In the chart the wheel power P1, the power P2 of the prime mover 12 (combustion engine) and the power P3 of the electric machine 17 are drafted in dependence of the speed v of vehicle. Fig. 14 shows a rotational speed chart example for such six speed transmission with wheel rotational speed n1, rotational speed n2 of the prime mover 12 and rotational speed n3 of the electric machine 17 in dependence of the speed v of vehicle. In this charts "LA" indicate the launch of the vehicle. During launch LA and during each of the gear shifts S1-2, S2-3, S3-4, S4-5, S5-6 the electric machine 17 absorbs power in order to provide torque fill during shifting. In Fig. 13 T95%, T53%, T79%, T64% and T91% indicate the torque fill level during shifting by absorbing power with the electric machine 17. After gear shift S5-6 the electric machine 17 generates constant electric power P2%, for example 1 ... 2 % of engine rated power. As indicated with reference numeral "A" in Fig. 12, in this operating range the electric machine 17 is rotating at slow rotational speed n3, providing torque reaction and electric power generation. The peeks SYN 1/3 and SYN 3/5 of the rotational speed n3 shown in Fig. 14 indicate shaft speed synchronization for preselecting 1^{st} gear G1 or 3^{rd} gear G3, and 3^{rd} gear G3 or 5^{th} gear G5, respectively.

## Claims

1. A multi-speed transmission (10), especially for a vehicle, comprising an input shaft (11), two concentric driveshafts (13, 14) with plurality of gearwheels (GRa, G1a, G2a, G3a, G4a, G5a) on them, at least one driven shaft (15, 16) with a plurality of gearwheels (GRb, G1b, G2b, G3b, G4b, G5b) on it meshing with the gearwheels (GRa, G1a, G2a, G3a, G4a, G5a) on said driveshafts (13, 14), said gearwheels (GRa, G1a, G2a, G3a, G4a, G5a, GRb, G1b, G2b, G3b, G4b, G5b) being engageable to said shafts (13, 14, 15, 16) with clutches (C1, C2, C3, C4), forming a powerflow from said driveshafts (13, 14) to the driven shaft(s) (15, 16) with different ratios, a controllable lock-up clutch (CL) connecting said driveshafts (13, 14) with each other, a rotating electric machine (17), connected to a battery (19) via a control system (18), an output shaft (28), coaxial to said driveshafts (13, 14), constantly meshing with the driven shaft (15, 16) via gearing and being directly engageable to at least one of the driveshafts (13, 14) via the clutches (C1, C4), a planetary gearset (20) with three links (21, 22, 23), first (21) of said links being connected to the first driveshaft (13) and the input shaft (11), second link (22) being connected to the second driveshaft (14), third link (23) being kinematically connected to the rotor (17a) of said electric machine (17), **characterised in that** that the axis (30) of the rotor (17a) of the electric machine (17) is arranged spaced apart from the axis (31) of said driveshafts (13, 14), wherein the third link (23) is kinematically connected to the rotor (17a) of said electric machine (17) by a drivetrain (32), and the speed ratio between the second link (22) and the third link (23) is negative for stopped first link (21).

2. The multi-speed transmission (10) according to claim 1, **characterised in that** the at least one controllable lock-up clutch (CL) is arranged between one gearwheel (13a) of the first driveshaft (13) and one gearwheel (14a) of the second driveshaft (14).

3. The multi-speed transmission (10) according to claim 1 or 2, **characterised in that** the first link (21) of the planetary gearset (20) is a planet carrier, the second link (22) is a ring gear, and the third link (23) is a sun gear.

4. The multi-speed transmission (10) according to one of the claims 1 to 3, **characterised in that** the first driveshaft (13) is mounted internally through the second driveshaft (14) and the output shaft (28) is directly engageable to the first driveshaft (13) via at least one clutch (C4).

5. The multi-speed transmission (10) according to one of the claims 1 to 3, **characterised in that** the second driveshaft (14) is mounted internally through the first driveshaft (13) and the output shaft is directly engageable to the second driveshaft via at least one clutch (C4).

6. The multi-speed transmission (10) according to one of the claims 1 to 5 **characterised in that** the first driveshaft (13) comprises driving gearwheels (G2a, G26a, G4a) for 2^{nd} and 4^{th} speeds (G2, G4), and the second driveshaft (14) comprises driving gearwheels (GRa, G1a, G3a, G35, G5a) for 1^{st} reverse/2^{nd} reverse (R1, R2), 1^{st}, 3^{rd} and 5^{th}/7^{th} speeds (G1, G3, G5, G7), wherein 2^{nd}, and 4^{th} speeds (G2, G4) are provided by engaged clutch (C3, C4) of corresponding gear pair (G2a, G2b; G26a, G2b; G4a, G4b), 1^{st} reverse (R1), 1^{st} (G1), 3^{rd} (G3) and 5^{th} (G5) speeds are provided by engaged clutch (C1, C2) of corresponding geartrain or gear pair (GRa, GRb; G1a, G1b; G3a, G3b; G35a, G3b; G5a, G5b; G35a, G5b), and engaged lock-up clutch (CL), 2^{nd} reverse speed (R2) is provided by engaged clutch (C2) of 1^{st} reverse/2^{nd} reverse geartrain (R) and torque reaction from the rotor (17a) of the electric machine (17), 7^{th} speed is provided by engaged clutch (C1) of 5^{th}/7^{th} gear pair (G5a, G5b; G35a, G5b) and torque reaction from the rotor (17a) of the electric machine (17), and 6^{th} speed is provided by engaged clutch (C4), connecting the output shaft (28) to the first driveshaft (13). (Fig. 1, 10)

7. The multi-speed transmission (10) according to one of the claims 1 to 5, **characterised in that** the first driveshaft (13) comprises driving gearwheels (G2a, G4a, G6a) for 2^{nd}, 4^{th} and 6^{th} speeds (G2, G4, G6), and the second driveshaft (14) comprises driving gearwheels (GRa, G1a, G3a, G5a) for 1^{st} reverse/2^{nd} reverse (R1, R2), 1^{st} (G1), 3^{rd} (G3) speeds, wherein 2^{nd}, 4^{th} and 6^{th} speeds (G2, G4, G6) are provided by engaged clutch (C3, C4) of corresponding gear pair (G2a, G2b; G4a, G4b, G6a, G6), 1^{st} reverse (R1), 1^{st} and 3^{rd} speeds (G1, G3) are provided by engaged clutch (C1, C2) of corresponding geartrain or gear pair (GRa, GRb; G1a, G1b; G3a, G3b) and engaged lock-up clutch (CL), 2^{nd} reverse speed (R2) is provided by engaged clutch (C2) of 1^{st} reverse/2^{nd} reverse geartrain (R) and torque reaction from the rotor (17a) of the electric machine (17), 5^{th} speed (G5) is provided by engaged clutch (C1), connecting the output shaft (28) to the second driveshaft (14), and engaged lock-up clutch (CL) and 7^{th} speed (G7) is provided by engaged clutch (C1), connecting the output shaft (28) to the second driveshaft (14), and torque reaction from the rotor (17a) of the electric machine (17). (Fig. 2)

8. The multi-speed transmission (10) according to one of the claims 1 to 5 **characterised in that** the first driveshaft (13) comprises driving gearwheels (G2a, G4a) for 2^{nd}, and 4^{th} speeds (G2, G4), and the second driveshaft (14) comprises driving gearwheels (GRa, G1a, G3a, G6a) for 1^{st} reverse/2^{nd} reverse (R1, R2), 1^{st}, 3^{rd} and 6^{th} speeds (G1, G3, G6), wherein 2^{nd}, and 4^{th} speeds (G2, G4) are provided by engaged clutch (C3, C4) of corresponding gear pair (G2a, G2b; G4a, G4b), 1^{st} reverse (R1), 1^{st} (G1) and 3^{rd} (G3) forward speeds are provided by engaged clutch (C2) of corresponding geartrain or gear pair (GRa, GRb; G1a, G1b; G3a, G3b), and engaged lock-up clutch (CL); 2^{nd} reverse (R2) speed is provided by engaged clutch (C2) of corresponding geartrain or gear pair (GRa, GRb; G1a, G1b) and torque reaction from the rotor (17a) of the electric machine (17), 6^{th} speed is provided by engaged clutch (C1) of support/6th gear pair (G6a, G6b) and torque reaction from the rotor (17a) of the electric machine (17), and 5^{th} speed is provided by engaged clutch (C4), connecting the output shaft (28) to the first driveshaft (13). (Fig. 8, 11)

9. The multi-speed transmission (10) according to one of the claims 1 to 5, **characterised in that** the first driveshaft (13) comprises driving gearwheels (G2a, G4a, G5a) for 2^{nd}, 4^{th} and 5^{th} speeds (G2, G4, G5), and the second driveshaft (14) comprises driving gearwheels (GRa, G1a, G3a) for 1^{st} reverse/2^{nd} reverse (R1, R2), 1^{st} (G1) and 3^{rd} (G3) speeds, wherein 2^{nd}, 4^{th} and 5^{th} speeds (G2, G4, G5) are provided by engaged clutch (C3, C5) of corresponding gear pair (GRa, GRb; G2a, G2b; G4a, G4b, G5a, G5b), 1^{st} reverse (R1), 1^{st} and 3^{rd} speeds (G1, G3) are provided by engaged clutch (C1, C2) of corresponding geartrain or gear pair (GRa, GRb; G1a, G1b; G3a, G3b) and engaged lock-up clutch (CL), 2^{nd} reverse speed (R2) is provided by engaged clutch (C2) of 1^{st} reverse/2^{nd} reverse geartrain (R) and torque reaction from the rotor (17a) of the electric machine (17), 6^{th} speed (G6) is provided by engaged clutch (C1), connecting the output shaft (28) to the second driveshaft (14), and torque reaction from the rotor (17a) of the electric machine (17). (Fig. 9)

10. The multi-speed transmission (10) according to one of the claims 1 to 9, **characterised in that** the transmission (10) comprises two driven shafts (15, 16), wherein the reverse geartrain (R) is provided by meshing the driven gear (G1b) of the 1^{st} speed (G1) on one of the driven shafts (15; 16) and the driven gear (GRb) of reverse speeds (R) on another driven shaft (16; 15). (Fig. 10, 11)

11. The multi-speed transmission (10) according to one of the claims 1 to 10, **characterised in that** the transmission (10) comprises two driven shafts (15, 16), wherein at least one gear (G35a, G36a) on the driveshafts (13, 14) meshes with two gears (G3b, G5b; G3b, G6b) on different driven shafts (15, 16). (Fig. 10, 11)

12. The multi-speed transmission (10) according to one of the claims 1 to 9, **characterised in that** the reverse geartrain (R) is provided by meshing the driving gear (G1a) of the 1^{st} speed (G1), or driving pinion (GRa) of reverse speeds (R1, R2), with driven reverse gear (GRb) by additional idling shaft with at least one gear mesh.

13. The multi-speed transmission (10) according to one of the claims 1 to 12, **characterised in that** it comprises a park brake device (P), locking one of the driven shafts (15, 16) to a housing of the transmission (10).

14. The multi-speed transmission (10) according to one of the claims 1 to 13, **characterised in that** the lock-up clutch (CL) and one of the clutches (C3, C4) engaging one of the pinions (G2a, G5a, G6a) on the first driveshaft (13), are sharing a common shifting sleeve.

15. Method for operating a multi-speed transmission (10), especially for a vehicle, comprising an input shaft (11), two concentric driveshafts (13, 14) with plurality of gearwheels (GRa, G1a, G2a, G3a, G4a, G5a) on them, at least one driven shaft (15, 16) with a plurality of gearwheels (GRb, G1b, G2b, G3b, G4b, G5b) on it meshing with the gearwheels (GRa, G1a, G2a, G3a, G4a, G5a) on said driveshafts (13, 14), said gearwheels (GRa, G1a, G2a, G3a, G4a, G5a, GRb, G1b, G2b, G3b, G4b, G5b) being engageable to said shafts (13, 14, 15, 16) with clutches (C1, C2, C3, C4), forming a powerflow from said driveshafts (13, 14) to the driven shaft(s) (15, 16) with different ratios, a controllable lock-up clutch (CL) being arranged between any two adjacent gearwheels (13a, 14a) on said driveshafts (13, 14), connecting said driving shafts (13, 14) with each other, a rotating electric machine (17), connected to a battery (19) via a control system (18), an output shaft (28), coaxial to said driveshafts (13, 14), constantly meshing with the driven shaft (15) via gearing and being directly engageable to at least one of the driveshafts (13, 14) via the clutches (C1, C4), a planetary gearset (20) with three links (21, 22, 23), first (21) of said links being connected to the first driveshaft (13) and the input shaft (11), second link (22) being connected to the second driveshaft (14), third link (23) being kinematically connected to the rotor (17a) of said electric machine (17), **characterised in that** the electric machine (17) is used for starting up a prime mover (12) attached to the input shaft (11) in a first starting mode with simultaneous engaging of the powerflow from second driveshaft (14) to the driven shaft (15, 16), disengaging of a lock-up clutch (CL), and applying the brake torque in the powerflow from the driveshaft (13, 14) to the wheels of the vehicle, and the electric machine (17) is used for starting up the prime mover (12) in a second starting mode with engaging of the lock-up clutch (CL) and disengaging all other of said clutches (C1, C2, C3, C4).

16. The method according to claim 15, **characterised in that** the first starting mode is used for cold engine cranking.

17. The method according to claim 15 or 16, **characterised in that** the second starting mode is used for warm engine cranking.

18. The method according to one of the claims 15 to 17, **characterised in that** the brake torque in the powerflow from the driveshaft (13, 14) to the wheels the brake torque in the powerflow from the driveshaft (13, 14) to the wheels of the vehicle is applied by wheel brakes of the vehicle.

19. The method according to one of the claims 15 to 17, **characterised in that** the brake torque in the powerflow from the driveshaft (13, 14) to the wheels of the vehicle is applied by park brake (P).

20. The method according to one of the claims 15 to 17, **characterised in that** the brake torque in the powerflow from the driveshaft (14) to the wheels of the vehicle is applied by simultaneous engagement of two of said clutches (C1, C2).

21. Method for operating a multi-speed transmission (10), especially for a vehicle, comprising an input shaft (11), two concentric driveshafts (13, 14) with plurality of gearwheels (GRa, G1a, G2a, G3a, G4a, G5a) on them, at least one driven shaft (15, 16) with a plurality of gearwheels (GRb, G1b, G2b, G3b, G4b, G5b) on it meshing with the gearwheels (GRa, G1a, G2a, G3a, G4a, G5a) on said driveshafts (13, 14), said gearwheels (GRa, G1a, G2a, G3a, G4a, G5a, GRb, G1b, G2b, G3b, G4b, G5b) being engageable to said shafts (13, 14, 15, 16) with clutches (C1, C2, C3, C4), forming a powerflow from said driveshafts (13, 14) to the driven shaft(s) (15, 16) with different ratios, a controllable lock-up clutch (CL) connecting said driving shafts (13, 14) with each other, a rotating electric machine (17), connected to a battery (19) via a control system (18), an output shaft (28), coaxial to said driveshafts (13, 14), constantly meshing with the driven shaft (15) via gearing and being directly engageable to at least one of the driveshafts (13, 14) via the clutches (C1, C4), a planetary gearset (20) with three links (21, 22, 23), first (21) of said links being connected to the first driveshaft (13) and the input shaft (11), second link (22) being connected to the second driveshaft (14), third link (23) being kinematically connected to the rotor (17a) of said electric machine (17), **characterised in that** the transmission (10) is controlled at least in one operating mode of the vehicle in a way that the powerflow from the second driveshaft (14) to the driven shaft (15, 16) is engaged by the corresponding clutch (C1, C2), the lock-up clutch (CL) is disengaged, wherein the electric machine (17) applies torque reaction, and the speed of the electric machine (17) and the overall speed ratio of the transmission (10) are defined by the sum of the power losses in the electric machine (17) with its control system, and current instant power consumption from a battery (19) with auxiliary electrical consumers of the vehicle.
